# EUROPÄISCHE PATENTSCHRIFT

(11) **EP 1 198 858 B1**
(45) Veröffentlichungstag und Bekanntmachung des Hinweises auf die Patenterteilung: **01.03.2006**
(21) Anmeldenummer: 00938731.7
(22) Anmeldetag: 02.06.2000
(51) Int. Cl.: H01M 8/10

(54) **BRENNSTOFFZELLE MIT POLYMERELEKTROLYT-MEMBRAN**
FUEL CELL WITH POLYMER ELECTROLYTE MEMBRANE
PILE A COMBUSTIBLE A MEMBRANE ELECTROCHIMIQUE POLYMERE

(30) Priorität: 10.06.1999 DE 19926353
(43) Veröffentlichungstag der Anmeldung: 24.04.2002
(73) Patentinhaber: BALLARD POWER SYSTEMS INC., Burnaby, British Columbia V5J 5J9 (CA)
(72) Erfinder: BIEGERT, Hubertus, D-89079 Ulm (DE); BRITZ, Peter, D-73230 Kirchheim (DE); LAMM, Arnold, D-89275 Oberelchingen (DE); TOTH, Gabor, D-89257 Illertissen-Jedesheim (DE); URBAN, Peter, D-92224 Amberg (DE)
(74) Vertreter: Beyer, Andreas
(86) Internationale Anmeldenummer: PCT/EP2000/005052
(87) Internationale Veröffentlichungsnummer: WO 2000/077873

(56) Entgegenhaltungen:
- US-A- 5 525 436
- US-A- 5 795 496
- WANG J -T ET AL: "A H2/O2 FUEL CELL USING ACID DOPED POLYBENZIMIDAZOLE AS POLYMER ELECTROLYTE" ELECTROCHIMICA ACTA,GB,ELSEVIER SCIENCE PUBLISHERS, BARKING, Bd. 41, Nr. 2, 1. Februar 1996 (1996-02-01), Seiten 193-197, XP000770320 ISSN: 0013-4686
- B. BAUER ET AL: "Electrochemical characterisation of sulfonated polyetherketone membranes" JOURNAL OF NEW MATERIALS FOR ELECTROCHEMICAL SYSTEMS, Bd. 3, Nr. 2, 2000, Seiten 93-98, XP000950017
- JOCHEN KERRES ET AL: "Synthesis and characterization of novel acid-base polymer blends for application in membrane fuel cells" SOLID STATE IONICS, Bd. 125, 1999, Seiten 243--249, XP002149019

## Beschreibung

Die Erfindung betrifft eine Brennstoffzelle mit einer protonenleitenden Polymerelektrolyt-Membran gemäß dem Oberbegriff des Anspruchs 1.

Polymer-Elektrolyt-Brennstoffzellen, wie sie aus DE-A1-195 42 475 bekannt sind, weisen semipermeable Membranen auf, welche zum einen Anodenraum und Kathodenraum der Brennstoffzelle voneinander trennen, jedoch den Transport von Protonen von der Anode zur Kathode ermöglichen sollen.

Aus dem Beitrag von Wang et al. "A H2/O2 fuel cell using acid doped polybenzimidazole as polymer electrolyte" in Electrochimica Acta, GB, Bd. 41, Nr. 2, vom 1. Februar 1996, Seiten 193-197, aber auch aus der US-A-5 525 436 ist ein thermoplastisches Polymer bekannt, das als Membran einer PEM-Brennstoffzelle eingesetzt wird, die bei mehr als 120° C betrieben wird. Das Polymer ist phosphorsäuredotiertes Polybenzimidazol.

Eine übliche Membran ist ein Fluorpolymer, z.B. Nafion ™, welches bei den Gebrauchstemperaturen der Brennstoffzelle von etwa 80°C-100°C stabil und durch eine hohe Ionenleitfähigkeit für Protonen gekennzeichnet ist.

Neben den hohen Kosten für diese Art von Membranen tritt ein weiteres Problem beim Einsatz dieser Art von Brennstoffzellen auf, wenn als Brennstoff nicht reine Medien, vor allem reiner Wasserstoff, verwendet werden, sondern kohlenwasserstoffhaltige Medien eingesetzt werden, bei denen der Wasserstoff zum Betreiben der Brennstoffzelle erst abgetrennt werden muß. Dies führt dazu, daß Wasserstoff mit Kohlenmonoxid und Kohlendioxid verunreinigt in den Anodenraum gelangt. Während das Vorhandensein von Kohlendioxid weniger kritisch ist, genügen bereits geringe Mengen von Kohlenmonoxid, um Katalysatoren im Brennstoffzellensystem, wie z.B. Platin, welche mit den Verunreinigungen in Berührung kommen, zu vergiften.

Verstärkt wird dieses Problem zusätzlich, da zur Rückgewinnung von unverbrauchtem Wasserstoff das Reaktionsabgas üblicherweise zumindest teilweise im Kreislauf geführt wird und sich so der Kohlenmonoxidgehalt aufkonzentrieren kann.

Um solche unerwünschten Vergiftungszustände der Katalysatoren zu vermeiden, müssen zum Teil aufwendige Reinigungsschritte durchgeführt werden, um den Kohlenmonoxidgehalt gering genug, vorzugsweise deutlich unter 0,5 vol%, zu halten. Die notwendigen Gasreinigungsstufen sind teuer und reduzieren den Wirkungsgrad des Brennstoffzellensystems.

Aus der gattungsbildenden US 5,795,496 ist eine Brennstoffzelle nach dem Oberbegriff des Anspruchs 1 bekannt. Dieses Dokument beschreibt insbesondere Polymermaterialien für Brennstoffzellenmembranen, welche kostengünstiger als herkömmliche Membranen, wie beispielsweise aus Nafion™, herzustellen sind.

Der Erfindung liegt die Aufgabe zugrunde, eine Brennstoffzelle der eingangs bezeichneten Art anzugeben, die auch bei hohen Differenzdrücken an der Membran zuverlässig arbeitet.

Die Aufgabe wird bei einer gattungsbildenden Brennstoffzelle gemäß dem Oberbegriff des Anspruchs 1 durch die Merkmale im kennzeichnenden Teil des Anspruchs 1 gelöst.

Eine erfindungsgemäße Brennstoffzelle weist eine Membran aus thermoplastischem Polymer auf, welcher eine Dauergebrauchstemperatur von mindestens 100°C aufweist. Dies hat den Vorteil, dass das Temperatumiveau der Anordnung insgesamt angehoben werden kann. Die Folge ist, dass das sogen. Boudouard-Gleichgewicht, welches das Verhältnis von Kohlenmonoxid, Kohlendioxid und Kohlenstoff in einem Reformat eines kohlenwasserstoffhaltigen Mediums bestimmt, zugunsten des unkritischen Kohlendioxids und zuungunsten des schädlichen Kohlenmonoxids verschoben wird, d.h. bei einer der Brennstoffzelle vorgeschalteten Gasreinigungsstufe und/oder vor dem Eintritt in den Anodenraum bildet sich weniger Kohlenmonoxid.

Gleichzeitig ist eine weitere Folge, daß der Anodenkatalysator, vorzugsweise Platin, erheblich weniger Kohlenmonoxid adsorbiert und daher höhere Kohlenmonoxidgehalte im Gasstrom tolerieren kann.

Besonders bevorzugt wird die Brennstoffzelle bei einer Dauergebrauchstemperatur von mindestens 120°C betrieben.

Ein weiterer Vorteil des hohen Temperatumiveaus der Brennstoffzelle liegt auch darin, dass ein erheblich geringerer Aufwand zum Abkühlen des Reaktionsgases notwendig ist, welches üblicherweise beim Austritt aus einer der Brennstoffzelle vorgelagerten Gasreinigung eine Temperatur von etwa 300°C aufweisen kann. Durch Einsparungen bei der Gasreinigung und dem Kühlsystem sind erhebliche Verbesserungen des Wirkungsgrades der Brennstoffzellenanlage möglich.

Eine bevorzugte Membran weist eines oder mehrere der Polymere und/oder Copolymere und/oder Polymerblends von Polysulfon (PSU) Polyethersulfon (PES), Polyetheretherketon (PEEK), Polyimid (P1), Polybenzimidazol (PBI) auf.

Bevorzugt ist dabei die Membran aus einem asymmetrischen Polymer gebildet, welches von Poren durchsetzt ist, die von einer Flachseite der Membran zur anderen Flachseite verlaufen. Dabei weist eine der Flachseiten der Membran eine durchgehende Deckschicht aus demselben Polymer auf, so daß der porendurchsetzte Membranbereich eine Stützstruktur für die Deckschicht bildet. Die Porendurchmesser können entlang ihrer Längsachse konstant sein oder auch von einer Flachseite zur anderen zunehmen; bevorzugt gehen die Poren mit kleinem Porendurchmesser von der Deckschicht aus.

Der Vorteil der von der Stützstruktur gestützten Deckschicht ist, daß durch die durchgehende Deckschicht ein hoher

Druckgradient zwischen Anodenraum und Kathodenraum bei gleichzeitig günstiger Protonenleitfähigkeit aufrechterhalten werden kann.

Besonders bevorzugt wird die Membran modifiziert, um die Ionenleitfähigkeit zu erhöhen. Bevorzugt wird die Membran mit elektromagnetischer und/oder Korpuskularstrahlung bestrahlt, so daß bestrahlungsinduzierte Defektstellen zur erhöhten Protonenleitfähigkeit beitragen. Eine weitere bevorzugte Modifikation besteht darin, das thermoplastische Polymer mit Zusätzen zu versehen, z.B. funktionellen Gruppen, welche die Protonenleitfähigkeit erhöhen.

Neben der Erhöhung des Systemwirkungsgrades durch geringere Anforderungen an Gasreinigung und Gaskühlung ermöglicht die erfindungsgemäße Brennstoffzelle durch erhöhte Betriebstemperatur und/oder erhöhtem Betriebsdruck auch eine Erhöhung der Leistungsdichte der Brennstoffzelle.

Weitere Vorteile und Ausgestaltungen der Erfindung sind den weiteren Ansprüchen und der Beschreibung zu entnehmen.

Im weiteren wird die Erfindung anhand von Figuren näher erläutert. Es zeigen
- Fig. 1: eine schematische Darstellung einer erfindungsgemäßen Brennstoffzelle,
- Fig. 2: einen schematischen Querschnitt durch eine Membran einer erfindungsgemäßen Brennstoffzelle,
- Fig.3: Rasterelektronenmikroskop-Aufnahmen einer bevorzugten Membran einer erfindungsgemäßen Brennstoffzelle und
- Fig. 4: Rasterelektronenmikroskopaufnahmen (4a, 4b, 4c, 4d) von Polymeren mit unterschiedlichen Herstellparametern.

Die bei einer üblichen Brennstoffzelle mit Polymerelektrolyt-Membran eingesetzte Fluorpolymer-Membran kann einer Dauergebrauchstemperatur von etwa 80°C ausgesetzt werden. Bei einer Exposition der Membran bis zu 120°C deuten Verfärbungen in der Membran auf eine beginnende irreversible Veränderung des Materials hin.

Bei der erfindungsgemäßen Brennstoffzelle dagegen werden Membranen eingesetzt, welche eine Dauergebrauchstemperatur von deutlich über 80°C aufweisen. Diese können aus symmetrischen oder asymmetrischen thermoplastischen Polymeren und/oder deren Copolymeren und/oder deren Polymerblends gebildet sein.

Eine erfindungsgemäße Brennstoffzelle weist zumindest eine Zelle mit einem Anodenraum und einem Kathodenraum auf, wobei Kathode und Anode durch eine thermoplastische Polymermembran getrennt sind, welche eine Dauergebrauchstemperatur von mindestens 100°C aufweist. Besonders bevorzugt ist die Brennstoffzelle aus einem Stapel mit einer Mehrzahl solcher Zellen aufgebaut.

Günstige Polymere und/oder Copolymere und/oder Polymerblends weisen Polysulfon (PSU), Polyethersulfon (PES), Celluloseacetat (CA), Polyacrylnitril (PAN) Polyetheretherketon (PEEK), Polyimid (P1), Polybenzimidazol (PBI) auf, welche eine hohe Dauergebrauchstemperatur tolerieren. Die einzelnen Polymerenamen sollen im erweiterten Sinne verstanden werden; so kann unter dem Begriff Polysulfon nicht nur ein Polymer verstanden werden, welches Alkylgruppen in der Kette enthält, sondern auch solche umfasst, die nur Arylgruppen in der Kette enthalten und manchmal Polyarylsulfone bezeichnet werden. Günstige Werkstoffe sind jedenfalls solche, die z. B. zum

Kapseln von Hochtemperaturelektronik- und/oder Hochleistungselektronik-Bausteinen verwendet werden, welche in vergleichbaren Temperaturbereichen von 100°C bis 300°C eingesetzt werden sollen.

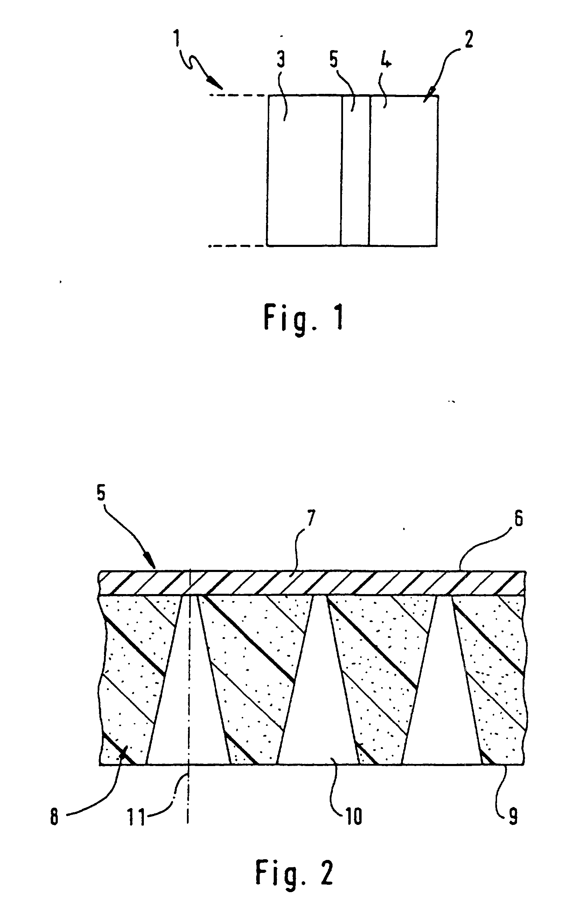

In Fig. 1 ist eine schematische Anordnung einer erfindungsgemäßen Brennstoffzelle in Stapelbauweise dargestellt. Eine Brennstoffzelle 1 mit mindestens einer ersten Zelle 2 bestehend aus einem Kathodenraum 3 und einem Anodenraum 4 sind durch eine Polymerelektrolytmembran 5 getrennt. Ein Permeat, beispielsweise Protonen des Wasserstoffs, gelangt von der Anodenseite auf die Kathodenseite der Membran 5 durch das Polymer. Weitere Zellen der Brennstoffzelle und übliche Versorgungsanschlüsse sind nicht dargestellt.

In Fig. 2 ist eine bevorzugte Membran einer erfindungsgemäßen Brennstoffzelle im Querschnitt dargestellt. Eine bevorzugte Membran 5 ist aus einem sogen. asymmetrischen Polymer gebildet. Dieses besteht aus zwei Bereichen. Die asymmetrische Membran 5 weist auf einer ersten Flachseite 6 der Membran 5 eine dünne, durchgehende Deckschicht 7 auf, welche auf einer polymeren, porösen Stützstruktur 8 mit von der ersten Flachseite 6 zur weiteren Flachseite 9 verlaufenden Poren 10 angeordnet ist.

Ein Permeat, welches z.B. von der Anodenseite zur Kathodenseite der Membran 5 transportiert wird, muß nur einen sehr kurzen Weg durch die Deckschicht 7 zurücklegen, verglichen mit der gesamten Dicke der Membran 5. Die Permeabilität der Membran ist also sehr hoch. Gleichzeitig wird diese dünne Deckschicht 7 durch die poröse Stützstruktur 8 stabilisiert, was sehr vorteilhaft für die mechanischen Eigenschaften der Deckschicht 7 ist, verglichen mit einer vergleichbaren, artgleichen separaten dünnen Schicht. Die Membran 5 ist daher stabil gegen eine hohe Druckdifferenz.

Die Ausgestaltung der Deckschichtdicke 7 und der Stützstruktur 8 kann leicht durch Verfahrensparameter bei der Herstellung des Polymers gesteuert werden. Dabei läßt sich auch einstellen, ob die Poren 10 einen im wesentlichen konstanten Durchmesser oder einen entlang der Porenlängsachse 11 veränderlichen Durchmesser aufweisen, wie in der Figur dargestellt ist. Bevorzugt ist der Porendurchmesser an der Deckschicht 7 kleiner als an der offenporigen Flachseite 9 der Membran 5.

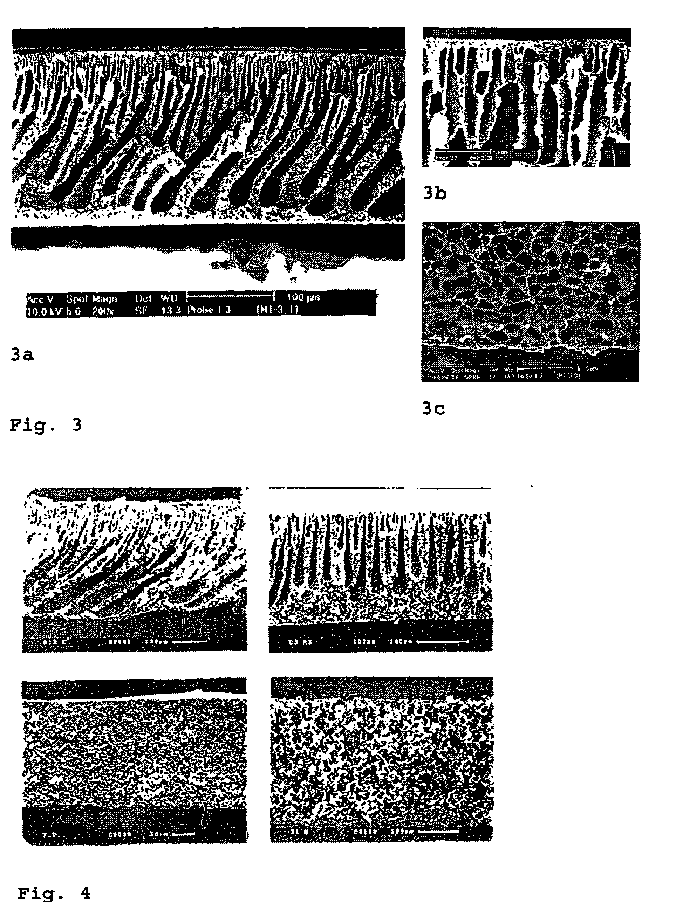

In Fig. 3 sind Rasterelektronenmikroskopaufnahmen einer Membran einer erfindungsgemäßen Brennstoffzelle dargestellt. In Fig. 3a ist zu sehen, wie die durchgehende Deckschicht im oberen Bereich der Aufnahme auf einer porösen Stützstruktur angeordnet ist. In Fig. 3b ist der obere Bereich der Membran vergrößert und die durchgehende Deckschicht deutlich zu erkennen. In Fig. 3c ist ein Aufblick auf die offenporigen Unterseite der Membran (entsprechend Flachseite 9 der Membran 5 gemäß Fig. 2) zu erkennen.

Solche bevorzugten asymmetrischen Membranen können durch ein an sich bekanntes, sogenanntes Phaseninversionsverfahren hergestellt werden. Dabei wird eine Membran aus einer vorwiegend flüssigen Phase durch Fällung in eine vorwiegend feste Phase überführt. Bei der Fällung wird der zu dem Fällungszeitpunkt aktuelle "Polymerverteilungszustand" abhängig von der Thermodynamik des Systems eingefroren. Durch Änderung der Herstellungsparameter kann somit Einfluß auf die innere Struktur der Membran genommen werden. Je nach Herstellbedingungen kann sich ein asymmetrisches Polymer oder ein nicht asymmetrisches Polymer bilden.

In Fig. 4 a, b, c, d sind vier Rasterelektronenmikroskopaufnahmen von unterschiedlich hergestellten Polymeren abgebildet. So können Polymere mit von einer Flachseite zur anderen schräg verlaufenden Poren (4a), mit gerade verlaufenden (4b) oder auch Polymere ohne asymmetrische Struktur (4c) oder mit einer granularen inneren Struktur (4d) Poren gebildet werden (Aufnahmen von rechts nach links und von oben nach unten gesehen).

Das Phaseninversionsverfahren hängt vorzugsweise von der Wahl der Lösungsmittel ab, in denen die Ausgangsstoffe des Polymers gelöst sind. So können aus unterschiedlichen Polymeren entsprechende bevorzugte Membranen gefertigt werden.

Infolge ihrer asymmetrischen Struktur kann die Membran 5 hohen Differenzdrücken von bis zu 7 bar, insbesondere bis zu 6 bar ausgesetzt werden, was für den Betrieb der Brennstoffzelle zur Erhöhung ihrer Leistungsdichte vorteilhaft ist.

Die Dicke der Deckschicht liegt bevorzugt im Bereich von 1 µm bis 50 µm, bevorzugt zwischen 1 µm und 25 µm; die Dicke der Stützstruktur bevorzugt im Bereich von 10 µm bis 500 µm, bevorzugt zwischen 35 µm und 200 µm. Der Porendurchmesser der makroskopischen Poren liegt vorzugsweise im Bereich zwischen 1 µm und 30 µm. Es können auch mikroskopische Poren gebildet werden, deren typische Durchmesser im Bereich einiger nm bis zu 1 µm liegen können.

Eine besonders bevorzugte Polymermembran ist als asymmetrischem Polysulfon-membran ausgebildet.

Die Ionenleitfähigkeit, insbesondere die Protonenleitfähigkeit der Membran kann eingestellt, vorzugsweise erhöht werden, indem zusätzlich funktionelle Defekte in dem Polymer erzeugt werden, die am Ionentransport bzw. am Transport eines Permeats durch die Membran beteiligt sind. Unter funktionellem Defekt soll verstanden werden, daß entweder eine für das jeweilige Polymer geeignete chemisch funktionelle Gruppe, z.B. SO₃⁻- und/oder PO₃⁻-Gruppen bei Polysulfon-Polymer, als Zusatz in das Polymer gemischt werden, z.B. als Additive mit Ionentauscheraktivität wie etwa Zeolithe, und/oder daß die Membran durch elektromagnetische Bestrahlung und/oder Teilchenbeschuß mit entsprechenden funktionellen Defekten versehen werden. Vorteilhaft ist, die Deckschichtdicke auf die Eindringtiefe der auf sie einwirkenden Bestrahlungsart abzustimmen. Ein solches Verfahren, mit dem die Ionenleitfähigkeit eines Polymers verändert werden kann, ist z.B. aus der DE-A1-195 33 680 bekannt. Je nach Projektil und/oder Art der Strahlung, Bestrahlungsbedingungen und bestrahltes Target können die Eigenschaften des Polymers in unterschiedlicher Weise verändert werden.

Weiterhin kann eine bevorzugte Membran 5 zur besseren Anbindung des Elektrolyten der Polymerelektrolyt-Membran an die damit verbundenen Elektroden und/oder um eine größere Elektrodenoberfläche zu erhalten, auf der offenporigen Flachseite 9 der Membran 5 mit Kohlenstoff infiltriert werden. Dies ermöglicht zusätzlich, daß der Katalysator mit einem geeigneten Depositionsverfahren, vorzugsweise mit einem Elektrodepositverfahren, direkt in die Membran 5 abgeschieden werden kann. Eine bevorzugte Brennstoffzelle weist eine Membran 5 mit asymmetrischer Struktur mit durchgehender Deckschicht 7 und poröser Stützstruktur 8 auf, wobei in die Stützstruktur 8 Katalysatormaterial eingelagert ist.

Eine erfindungsgemäße Brennstoffzelle mit einer bevorzugten Polysulfon-Membran kann bei einer Dauergebrauchstemperatur von 120°C bis zu 160°C eingesetzt werden, wobei die Membran sich nicht verändert und deren Protonenleitfähigkeit durch Implantation von SO₃⁻- und/oder PO₃⁻-Gruppen derjenigen von einer üblichen Fluorpolymer-Membran wie Nafion™ bei einer Einsatztemperatur von 80°C-110°C entspricht. Die ursprüngliche Ionenleitfähigkeit einer Polysulfonmembran von über 900 Ωcm kann dabei um zwei Größenordnungen verringert werden.

## Patentansprüche

1. Brennstoffzelle mit zumindest einer Zelle (2) mit einer protonenleitenden Polymerelektrolyt-Membran (5), welche zur Trennung eines Anodenraums (4) und eines Kathodenraums (3) in der Zelle (2) vorgesehen ist,
wobei die Membran (5) aus einem thermoplastischen Polymer mit einer Dauergebrauchstemperatur von mindestens 100° C gebildet ist,
**dadurch gekennzeichnet, dass** die Membran (5) mit einer durchgehenden Deckschicht (7) aus thermoplastischem Polymer ausgebildet ist, welche von einer polymeren Stützstruktur (8) getragen ist.

2. Brennstoffzelle nach Anspruch 1,
**dadurch gekennzeichnet, dass** die Membran (5) aus einem asymmetrischen Polymer gebildet ist.

3. Brennstoffzelle nach Anspruch 1 oder 2,
**dadurch gekennzeichnet, dass** die Stützstruktur (8) senkrecht zur Deckschicht (7) Poren (10) aufweist, deren Porendurchmesser sich ausgehend von der Deckschicht (7) erweitert.

4. Brennstoffzelle nach Anspruch 1 oder 2,
**dadurch gekennzeichnet, dass** die durchgehende Deckschicht (7) eine Dicke zwischen 1 µm und 50 µm aufweist.

5. Brennstoffzelle nach Anspruch 1 oder 2,
**dadurch gekennzeichnet, dass** die Stützstruktur (8) eine Dicke zwischen 10 µm und 500 µm aufweist.

6. Brennstoffzelle nach Anspruch 1,
**dadurch gekennzeichnet, dass** das thermoplastische Polymer aus einem oder mehreren der Polymere und/oder Copolymere und/oder Polymerblends von Polysulfon (PSU), Polyethersulfon (PES), Celluloseacetat (CA), Polyacrylnitril (PAN), Polyetheretherketon (PEEK), Polyimid (PI), Polybenzimidazol (PBI) gebildet ist.

7. Brennstoffzelle nach Anspruch 1 oder 2,
**dadurch gekennzeichnet, dass** die offenporige Seite der Stützstruktur (8) zusätzlich mit Kohlenstoff infiltriert ist.

8. Brennstoffzelle nach Anspruch 1,
**dadurch gekennzeichnet, dass** das thermoplastische Polymer zusätzliche bestrahlungsinduzierte Defekte und/oder funktionelle Gruppen zur Erhöhung der Ionenleitfähigkeit aufweist.

9. Brennstoffzelle nach mindestens einem der vorangehenden Ansprüche,
**dadurch gekennzeichnet, dass** die Membran (5) asymmetrisch mit durchgehender Deckschicht (7) und poröser Stützstruktur (8) ausgebildet ist und dass in die Stützstruktur (8) Katalysatormaterial eingelagert ist.

10. Brennstoffzelle nach mindestens einem der vorangehenden Ansprüche,
**dadurch gekennzeichnet, dass** die Membran (5) aus einem thermoplastischen Polymer mit einer Dauergebrauchstemperatur von mindestens 120° C gebildet ist.

## Claims

1. Fuel cell having at least one cell (2) with a proton-conducting polymer electrolyte membrane (5) which is intended to separate an anode space (4) and a cathode space (3) in the cell (2), the membrane (5) being formed from a thermoplastic polymer with a long-term use temperature of at least 100°C, **characterized in that** the membrane (5) is formed with a continuous covering layer (7) of thermoplastic polymer which is carried by a polymeric supporting structure (8).

2. Fuel cell according to Claim 1, **characterized in that** the membrane (5) is formed from an asymmetric polymer.

3. Fuel cell according to Claim 1 or 2, **characterized in that** the supporting structure (8) has pores (10) running perpendicular to the covering layer (7), the pore diameter of which widens starting from the covering layer (7).

4. Fuel cell according to Claim 1 or 2, **characterized in that** the continuous covering layer (7) has a thickness of between 1 µm and 50 µm.

5. Fuel cell according to Claim 1 or 2, **characterized in that** the supporting structure (8) has a thickness of between 10 µm and 500 µm.

6. Fuel cell according to Claim 1, **characterized in that** the thermoplastic polymer is formed from one or more of the polymers and/or copolymers and/or polymer blends from the group consisting of polysulphone (PSU), polyether sulphone (PES), cellulose acetate (CA), polyacrylonitrile (PAN), polyether ether ketone (PEEK), polyimide (PI), polybenzimidazole (PBI).

7. Fuel cell according to Claim 1 or 2, **characterized in that** the open-pore side of the supporting structure (8) is additionally infiltrated with carbon.

8. Fuel cell according to Claim 1, **characterized in that** the thermoplastic polymer has additional irradiation-induced defects and/or functional groups for increasing the ion conductivity.

9. Fuel cell according to at least one of the preceding claims, **characterized in that** the membrane (5) is formed asymmetrically with a continuous covering layer (7) and a porous supporting structure (8), and **in that** catalyst material is incorporated in the supporting structure (8).

10. Fuel cell according to at least one of the preceding claims, **characterized in that** the membrane (5) is formed from a thermoplastic polymer with a long-term use temperature of at least 120°C.

## Revendications

1. Pile à combustible comprenant au moins une pile (2) pourvue d'une membrane électrochimique polymère conductrice protonique (5) servant à séparer un espace anodique (4) d'un espace cathodique (3) à l'intérieur de ladite pile (2), la membrane (5) étant constituée d'un polymère thermoplastique présentant une température en fonctionnement continu d'au moins 100° C, **caractérisée en ce que** la membrane (5) est formée par une couche de couverture continue (7) en polymère thermoplastique, laquelle est supportée par une structure de support (8) polymère.

2. Pile à combustible selon la revendication 1,
**caractérisée en ce que** la membrane (5) est constituée d'un polymère asymétrique.

3. Pile à combustible selon la revendication 1 ou 2,
**caractérisée en ce que** la structure de support (8) présente perpendiculairement à la couche de couverture (7) des pores (10) dont le diamètre va s'élargissant à partir de la couche de couverture (7).

4. Pile à combustible selon la revendication 1 ou 2,
**caractérisée en ce que** la couche de couverture continue (7) présente une épaisseur variable entre 1 µm et 50 µm.

5. Pile à combustible selon la revendication 1 ou 2,
**caractérisée en ce que** la structure de support (8) présente une épaisseur variable entre 10 µm et 500 µm.

6. Pile à combustible selon la revendication 1,
**caractérisée en ce que** le polymère thermoplastique se compose d'un ou de plusieurs polymères et/ou copolymères et/ou mélanges de polymères composés à partir de polysulfone (PSU), de polyéther sulfone (PES), d'acétate cellulosique (CA), de polyacrylonitrile (PAN), de polyétheréthercétone (PEEK), de polyimide (PI), de polybenzimidazole (PBI).

7. Pile à combustible selon la revendication 1 ou 2,
**caractérisée en ce que** la face à pores ouverts de la structure de support (8) est en outre imprégnée de carbone.

8. Pile à combustible selon la revendication 1,
**caractérisée en ce que** le polymère thermoplastique présente en outre des défauts induits par rayonnements et/ou des groupes fonctionnels pour accroître la conductivité ionique.

9. Pile à combustible selon au moins l'une des revendications précédentes,
**caractérisée en ce que** la membrane (5) est formée de manière asymétrique par une couche de couverture continue (7) et par une structure de support (8) poreuse, et **en ce que** ladite structure de support (8) intègre une substance catalysante.

10. Pile à combustible selon au moins l'une des revendications précédentes,
**caractérisée en ce que** la membrane se compose d'un polymère thermoplastique présentant une température en fonctionnement continu d'au moins 120° C.
